Europäisches Patentamt

European Patent Office

Office européen des brevets

(11) Publication number: **0 538 915 A1**

# EUROPEAN PATENT APPLICATION

(21) Application number: **92201366.9**

(22) Date of filing: **13.05.92**

(51) Int. Cl.5: **E04B 9/12**

(30) Priority: **21.10.91 BE 9100970**

(43) Date of publication of application:
**28.04.93 Bulletin 93/17**

(84) Designated Contracting States:
**AT DE ES FR GB IT**

(71) Applicant: **CHICAGO METALLIC CONTINENTAL N.V.**
**Oude Sluisstraat 5**
**B-2110 WIJNEGEM(BE)**

(72) Inventor: **Grard, Gausbert**
**Mattestraat 48**
**B-1840 Malderen(BE)**

(74) Representative: **Donné, Eddy**
**Bureau M.F.J. Bockstael nv Arenbergstraat 13**
**B-2000 Antwerpen (BE)**

(54) **Coupling for profiles for suspended ceilings and profiles used to this end.**

(57) Coupling for profiles for suspended ceilings, in particular between at least two profiles, the wall (7) of a first profile (1) and the end (5;6) of a second profile (2;3) respectively, characterized in that the coupling (4) mainly consists of a double-walled, lip-shaped coupling element (9;10) made in one piece with the end (5;6) of the second profile (2;3) and which works in conjunction with a slot (11) in the wall (7) of the first profile (1), whereby one wall (12;13) of the double-walled coupling element (9;10) has been provided with a bent-out lip (14;15) in the shape of a barb.

Fig.1

The present invention concerns the coupling of profiles for suspended ceilings, in particular for ceilings which are made of a grate in which covering elements, such as ceiling tiles, are applied.

The invention also concerns profiles which are provided with coupling elements with which a coupling according to the invention can be made.

The invention hereby aims a coupling which makes it possible to provide a connection between the side wall of a first profile and the end of a second profile, and possibly through a third profile, whereby in the latter case the three profiles form a supporting structure.

The invention hereby aims a coupling whereby the profiles fit very tightly, such that they do not tilt in case of an asymmetrical load.

To this end the invention concerns a coupling for profiles for suspended ceilings, in particular between at least two profiles, the wall of a first profile and the end of a second profile respectively, characterized in that the coupling mainly consists of a double-walled, lip-shaped coupling element made in one piece with the end of the second profile and which works in conjunction with a slot in the wall of the first profile, whereby one wall of the double-walled coupling element has been provided with a bent-out lip in the shape of a barb. In this way, a tight coupling is obtained.

Preferably, the two walls of the coupling element are situated at a distance from one another which is preferably equal to the thickness of the plate of which the profile is made. In this way, a coupling with three profiles can be made whereby two profiles, which are each provided with a double-walled, lip-shaped coupling element, are coupled in a slot on both walls of a third profile and whereby the walls of the coupling elements of said two profiles telescope, as a result of which these two profiles are not only exactly in line, but also a tight coupling is made.

The invention also concerns a profile for making said coupling, characterized in that this profile has a double-walled, lip-shaped coupling element on at least two ends, whereby the wall of the double-walled coupling element has been provided with a bent-out lip in the shape of a barb, and whereby the two walls are preferably situated at a distance from one another which is equal to the thickness of the plate of which the profile is made.

In order to better explain the characteristics of the invention, by way of example only and without being limitative in any way, the following preferred embodiment is described with reference to the accompanying drawings where:

figure 1 shows a coupling according to the invention;

figure 2 shows a cross-section according to line II-II in figure 1;

figure 3 shows a cross-section according to line III-III in figure 2.

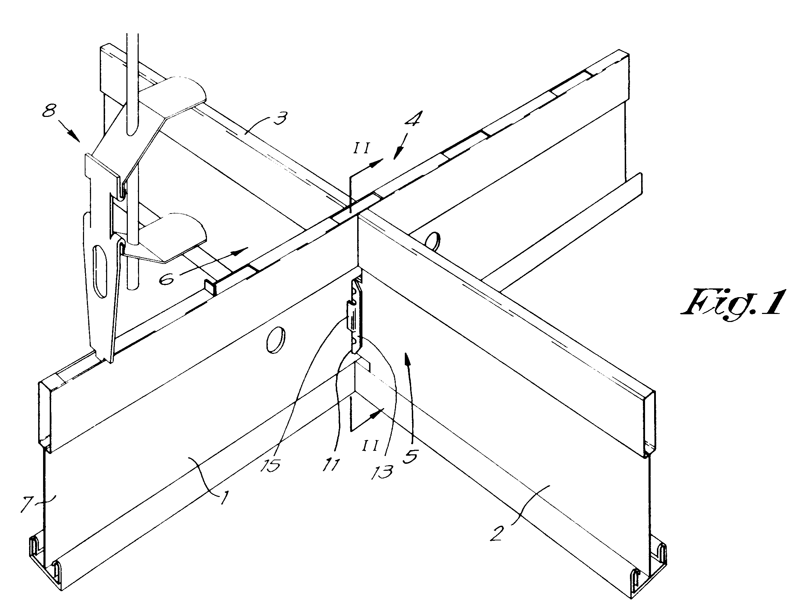

Figure 1 shows how a first profile 1, a second profile 2 and a third profile 3 can be coupled to one another by means of a coupling 4 according to the invention. The coupling 4 hereby provides for a connection between the ends 5 and 6 of the profiles 2 and 3 and the wall 7 of the first profile 1.

In this way, a grate-shaped structure can be formed of continuous profiles, in this case the profiles 1, and profiles mounted at right angles in between them, in this case the profiles 2 and 3. In between or under this grate, ceiling tiles can be applied. The grate can be suspended in the known way by means of hangers 8.

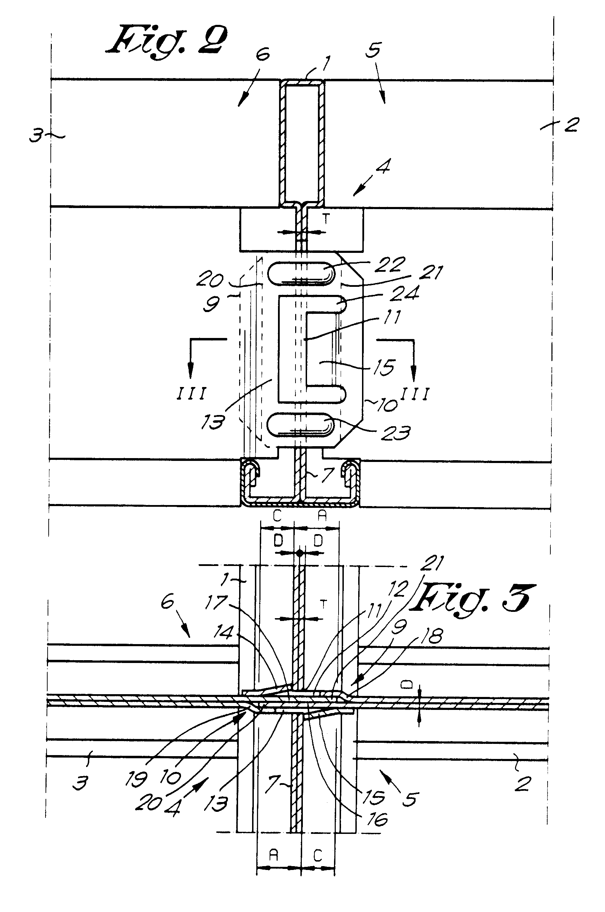

The present invention is special in that, as shown in figures 2 and 3, the coupling 4 mainly consists of double-walled, lip-shaped coupling elements, 9 and 10 respectively, made in one piece with the ends 5 and 6 of the profiles 2 and 3, which fit in one slot 11 in the side wall 7 of the first profile 1, whereby each time one wall, 12 and 13 respectively, of the respective coupling elements 9 and 10 has been provided with a bent-out lip, 14 and 15 respectively, in the shape of a barb.

Apart from the wall 12, the coupling element 9 has another wall 16. Both walls 12 and 16 are formed through the continuation of the body of the profile 2. The same goes for the walls 13 and 17 of the profile 3.

Preferably, the walls 12 and 16 of the coupling element 9, and the walls 13 and 17 of the coupling element 10 are made such that the coupling elements 9 and 10 telescope when the profiles 2 and 3 are fixed onto the profile 1. To this end, the wall 12 is situated at a distance from the wall 16 and the wall 13 is situated at a distance from the wall 17, whereby these distances are each equal to the thickness D of the plate of which the profiles 2 and 3 are made.

In order to obtain a mutual distance between the walls 12 and 16, the wall 12 has a bending 18. Analogously, in order to obtain a distance between the walls 13 and 17, the wall 13 of the coupling element 10 has a bending 19. It is clear that the above-mentioned lips 14 and 15 are part of these walls 12 and 13 which are bent.

The walls 16 and 17, however, are flat.

The two profiles 2 and 3 preferably form stops to one another as they telescope. In the example shown, this implies that the free ends 20 and 21 of the walls 16 and 17 make contact with the bendings 19 and 18. To this end each coupling element, 9 and 10 respectively, is built such that the distance A between the free end of the lip 14 or 15 and the stop formed by the bendings 18 or 19 is equal to the distance C between the free end of the lip 14 or 15 and the free end 20 or 21 increased with the thickness T of the wall 7. If the profile 7 is made of plate material having the same thickness as the profiles 2 and 3, and if the wall 7 is also double-walled, then T = 2D, and consequently it can be stated that:

A = C + 2D.

As shown in the figures 1 and 2, the coupling elements 9 and 10 can also be provided with deformations, such as protuberances 22 and 23, which are situated on the same side as the lips 14 or 15. These deformations provide for an extra clamp action. Naturally, they are positioned such that they work in conjunction with the edges of the slot 11.

Preferably, the lips 14 and 15 are surrounded by a U-shaped opening 24 in the concerned wall 12 or 13. In this way is obtained that the lips 14 and 15 can be easily pushed in and easily spring outwards again without their edges being hindered.

It is clear that the invention also concerns a coupling 4 whereby in one and the same slot 11 only one profile 2 or 3 has been attached to the profile 1.

The invention also concerns the profiles, in this case the profiles 2 and 3, which are provided with a coupling element 9 or 10 as described above.

The profiles 1, 2 and 3 preferably consist of roll-shaped steel. It is clear, however, that also other materials can be used.

The present invention is in no way limited to the embodiment described by way of example and shown in the accompanying drawings; on the contrary, such a coupling and the profiles used to this end can be made in various forms and dimensions while still remaining within the scope of the invention.

## Claims

1. Coupling for profiles for suspended ceilings, in particular between at least two profiles, the wall (7) of a first profile (1) and the end (5;6) of a second profile (2;3) respectively, characterized in that the coupling (4) mainly consists of a double-walled, lip-shaped coupling element (9;10) made in one piece with the end (5;6) of the second profile (2;3) and which works in conjunction with a slot (11) in the wall (7) of the first profile (1), whereby one wall (12;13) of the double-walled coupling element (9;10) has been provided with a bent-out lip (14; 15) in the shape of a barb.

2. Coupling according to claim 1, characterized in that it connects three profiles to one another, a first continuous profile (1) and two profiles (2,3) coupled to it on both sides respectively, whose coupling elements (9,10) fit in the same slot (11) in the side wall (7) of the first profile (1) and whereby these two profiles (2,3) are situated in line towards each other and at right angles with regard to the first profile (1).

3. Coupling according to claim 2, characterized in that the walls (12,13,16,17) of the double-walled coupling elements (9,10) of the profiles (2,3) concerned telescope.

4. Coupling according to any of the above claims, characterized in that the two walls (12,16;13,17) of each coupling element (9;10) are situated at a distance from one another.

5. Coupling according to claim 4, characterized in that the distance is equal to the thickness (D) of the plate of which the profile (2;3) is made.

6. Coupling according to claim 4 or 5, characterized in that one wall (12;13) shows a bending (18;19), whereas the other wall (16;17) is flat.

7. Coupling according to claim 6, characterized in that for each profile (2;3) the bent wall (12;13) is that wall which has been provided with the above-mentioned bent-out lip (14;15).

8. Coupling according to any of the above claims, characterized in that the coupling elements (9;10) are the continuation of the wall of the concerned profile (2;3).

9. Coupling according to any of the above claims, whereby this coupling (4) consists of three profiles, a continuous profile (1) and two profiles (2,3) attached to it at right angles respectively, characterized in that the two latter profiles (2,3), in particular their coupling elements (9,10) form stops to one another.

10. Coupling according to claim 9, characterized in that the coupling elements (9,10) each have one bent wall (12,13), whereby the bendings (18,19) function as stops and in that each coupling element (9,10) is built such that the distance (A) between the free end of the concerned lip (14,15) and the stop formed by the bending (18,19) is equal to the distance (C) between the free end of the lip (14,15) and the free end (20,21) of the unbent wall (16,17) increased with the thickness (T) of the wall (7) of the continuous profile (1).

11. Coupling according to any of the above claims, characterized in that the coupling elements (9,10) are provided with deformations in the shape of protuberances (22,23) which work in conjunction with the edge of the above-mentioned slot (11).

12. Profile for making a coupling according to claim 1 or 2, characterized in that this profile (2;3) has a double-walled, lip-shaped coupling element (9;10) on at least one end (5;6), whereby one wall (12;13) of the double-walled coupling element (9;10) has been provided with a bent-out lip (14;15) in the shape of a barb.

13. Profile according to claim 12, characterized in that the two walls (12,16;13,17) of the double-walled coupling element (9;10) are situated at a distance from one another, whereby this distance is equal to the thickness (D) of the plate of which the profile (2;3) is made.

14. Profile according to claim 13, characterized in that one wall, in particular the above-mentioned wall (12;13) to which the lip (14;15) is applied shows a bending (18;19) so as to obtain the above-mentioned distance and in that the second wall (16;17) is flat.

15. Profile according to claim 12, 13 or 14, characterized in that a U-shaped opening (24) has been made round the lip (14;15), at least in the wall (12;13) to which the lip (14;15) is applied.

16. Profile according to any of claims 12 to 15, characterized in that the coupling element (9;10) is provided with deformations in the shape of protuberances (22,23).

# Fig.1

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 470 239 (SAUER) | 1-5,8,9, 12,13,16 | E04B9/12 |
| Y | | 6,7,14 | |
| A | | 10,11,15 | |
| | * column 3, line 24 - column 5, line 26; figures * | | |
| | --- | | |
| Y | US-A-3 312 488 (R. P. LICKLITER ET AL) | 6,7,14 | |
| A | | 1-5, 8-13,15, 16 | |
| | * column 2, line 11 - column 3, line 65; figures * | | |
| | --- | | |
| X | US-A-4 525 973 (VUKMANIC ET AL) | 1-3,9, 11,12,15 | |
| | * abstract; figures * | | |
| | --- | | |
| X | US-A-3 922 829 (SAUER) | 1-3,9, 11,12,15 | |
| | * abstract; figures * | | TECHNICAL FIELDS SEARCHED (Int. Cl.5 ) |
| | --- | | |
| X | US-A-4 549 383 (VUKMANIC ET AL) | 1-3,9, 12,15 | E04B |
| | * abstract; figures * | | |
| | --- | | |
| X | US-A-4 677 802 (VUKMANIC) | 1-3,9, 12,15 | |
| | * abstract; figures * | | |
| | --- | | |
| A | US-A-3 294 428 (R. P. LICKLITER ET AL) * figures * | 1,5,13 | |
| | --- | | |
| A | US-A-3 096 862 (B. O. PURDY) * figures * | 1 | |
| | ----- | | |

The present search report has been drawn up for all claims

| Place of search | Date of completion of the search | Examiner |
|---|---|---|
| THE HAGUE | 15 JANUARY 1993 | RIGHETTI R. |

EPO FORM 1503 03.82 (P0401)